# DEMANDE DE BREVET EUROPEEN

(11) **EP 0 750 409 A1**
(43) Date de publication de la demande: **27.12.1996**
(21) Numéro de dépôt: 96401335.3
(22) Date de dépôt: 19.06.1996
(51) Int. Cl.: H04J 14/02, H04B 10/213

(54) **Dispositif reconfigurable pour insertion-extraction de longueurs d'onde**

(30) Priorité: 21.06.1995 FR 9507412
(71) Demandeur: FRANCE TELECOM, 75015 Paris (FR)
(72) Inventeur: Hamel, André, 22300 Lannion (FR); Laville, Daniel, 22700 Perros-Guirec (FR)
(74) Mandataire: Dubois-Chabert, Guy

(57) **Abrégé**

Ce dispositif comprend des multiplexeurs à insertion-extraction optiques (M1 à M4), à filtre passe-bande, un commutateur optique (C1) dont les sorties sont reliées aux multiplexeurs et un moyen de couplage optique (C2) dont les entrées sont reliées aux multiplexeurs.

Application aux télécommunications optiques.

## Description

### DOMAINE TECHNIQUE

La présente invention concerne un dispositif reconfigurable pour l'insertion et l'extraction de longueurs d'onde.

Elle s'applique notamment au domaine des télécommunications optiques.

### ÉTAT DE LA TECHNIQUE ANTÉRIEURE

Des progrès importants ont été réalisés pour les systèmes de transmission par fibre optique et ont permis d'obtenir une portée de 90 km pour les systèmes industriels à 2,5 Gbit/s, avec des fibres optiques standards.

Les amplificateurs à fibre optique ont permis d'augmenter cette portée jusqu'à plusieurs centaines de kilomètres.

La capacité d'un système de transmission peut être accrue par multiplexage temporel ou par multiplexage en longueur d'onde.

Il est alors techniquement possible d'installer des artères de transmission à haut débit sur de grandes distances.

Mais, dans les pays de taille moyenne comme les pays européens, il est intéressant du point de vue économique de pouvoir effectuer une dérivation à partir d'une artère à haut débit pour desservir une agglomération importante.

Les équipements de ligne sont alors à un débit plus faible.

Le multiplexage en longueur d'onde associé à des dispositifs permettant le dérivation d'une longueur d'onde et l'insertion de celle-ci présente un intérêt certain.

Une telle technique présente également un intérêt dans les architectures en anneau car les composants optiques permettent de transmettre les signaux par routage spectral.

On consultera à ce sujet le document (1) qui, comme les autres documents cités par la suite, est mentionné à la fin de la présente description.

On connaît déjà des dispositifs permettant de séparer des longueurs d'onde.

Ces dispositifs connus utilisent des réseaux de diffraction et permettent de séparer de quatre à vingt canaux de longueur d'onde.

Pour ces dispositifs, les pertes d'insertion se situent entre 2,5 dB et 4 dB.

Il est possible de réaliser une extraction puis une insertion par un montage dos à dos de deux dispositifs de ce genre.

A ce sujet, on consultera le document (2).

Cependant, tous les canaux subissent les mêmes pertes d'insertion, de l'ordre de 5 à 6 dB.

Chaque canal a une fonction de transfert passe-bande qui est relativement étroite et dont le gabarit est de type sinusoïdal.

Cela signifie que les pertes sont minimales à la longueur d'onde centrale et que ces pertes augmentent lorsqu'on s'écarte de cette longueur d'onde centrale.

Dans l'état actuel de la technologie, la largeur à mi-hauteur d'une voie en transmission est de 0,8 nm pour une distance entre canaux de 4 nm.

Cette caractéristique nécessite un positionnement précis de la longueur d'onde des sources et la fonction de transfert est réduite par une mise en cascade des dispositifs connus, mentionnés plus haut.

### EXPOSÉ DE L'INVENTION

La présente invention concerne un dispositif reconfigurable pour l'insertion et l'extraction de longueurs d'onde, qui présente moins de pertes optiques qu'un dispositif reconfigurable réalisé au moyen des dispositifs connus, mentionnés plus haut.

De façon précise, la présente invention concerne un dispositif reconfigurable pour l'insertion et l'extraction de longueurs d'onde, caractérisé en ce qu'il comprend :
- une pluralité de multiplexeurs à insertion-extraction optiques (" *optical add-drop* multiplexers ") ayant chacun une entrée, une sortie, une entrée d'insertion et une sortie d'extraction,
- un commutateur optique principal à au moins M positions, où M est le nombre de multiplexeurs à insertion-extraction optiques, ce commutateur optique principal ayant une entrée et une pluralité de sorties, chaque position permettant de relier l'une de ces sorties à ladite entrée de l'un des multiplexeurs à insertion-extraction optiques,
- un moyen de couplage optique ayant une sortie et une pluralité d'entrées respectivement reliées auxdites sorties des multiplexeurs à insertion-extraction optiques,
et en ce que chaque multiplexeur à insertion-extraction optique comprend :
- un premier moyen optique formant un filtre passe-bande, apte à orienter vers la sortie d'extraction du multiplexeur un signal optique parmi un ensemble de signaux optiques de longueurs d'onde différentes les unes des autres, arrivant à ladite entrée du multiplexeur, et
- un deuxième moyen optique qui reçoit les autres signaux de l'ensemble et qui est apte à insérer parmi ceux-ci un signal optique provenant de l'entrée d'insertion du multiplexeur, ces autres signaux et le signal inséré étant envoyés à ladite sortie du multiplexeur.

Selon un premier mode de réalisation particulier du dispositif objet de l'invention, les premier et deuxième moyens optiques comprennent des filtres multidiélectriques passe-bande centrés sur la même longueur d'onde.

Selon un deuxième mode de réalisation particulier, les premier et deuxième moyens optiques comprennent des filtres à réseaux de Bragg photo-inscrits (" *photoinduced Bragg grating filters* ").

Le dispositif objet de l'invention peut comprendre en outre des moyens de repos destinés à empêcher l'extraction des signaux par les multiplexeurs à insertion-extraction optiques.

Dans une première réalisation particulière, les moyens de repos comprennent :
- un premier coupleur optique ayant une entrée, une première sortie reliée à l'entrée du commutateur optique principal et une deuxième sortie,
- un deuxième coupleur optique ayant une sortie, une première entrée reliée à la sortie du moyen de couplage optique et une deuxième entrée, et
- un commutateur optique à deux positions qui relie la deuxième sortie du premier coupleur à la deuxième entrée du deuxième coupleur et qui, dans une position, est apte à laisser passer la lumière provenant de cette deuxième sortie pour qu'elle parvienne à cette deuxième entrée et, dans une autre position, à empêcher ce passage de la lumière, et le commutateur optique principal possède en outre une position supplémentaire dans laquelle aucune lumière parvenant à l'entrée de ce commutateur principal ne peut atteindre les multiplexeurs.

Dans une deuxième réalisation particulière, les moyens de repos comprennent :
- un premier commutateur optique ayant des première et deuxième positions et ayant une entrée, une première sortie reliée à l'entrée du commutateur optique principal et une deuxième sortie, et
- un deuxième commutateur optique ayant des première et deuxième positions et ayant une première entrée reliée à la sortie du moyen de couplage optique, une deuxième entrée reliée à la deuxième sortie du premier commutateur et une sortie.

Lorsque les premier et deuxième commutateurs sont dans leur première position, la lumière parvenant à l'entrée du premier commutateur parvient à l'entrée du commutateur principal et la lumière parvenant à la première entrée du deuxième commutateur parvient à la sortie de celui-ci, tandis que lorsqu'ils sont dans leur deuxième position, la lumière parvenant à l'entrée du premier commutateur est envoyée à la deuxième entrée du deuxième commutateur.

Le moyen de couplage optique peut être un coupleur optique de type M vers 1.

En variante, on utilise, à la place de ce coupleur optique de type M vers 1, un commutateur optique secondaire à M positions, ce commutateur optique secondaire ayant M entrées et une sortie, chaque position permettant de relier l'une de ces M entrées à la sortie de ce commutateur secondaire.

On a ainsi moins de pertes optiques qu'avec le coupleur optique de type M vers 1.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue schématique d'un mode de réalisation particulier du dispositif reconfigurable objet de l'invention,
- la figure 2 est une vue schématique d'un multiplexeur à insertion-extraction optique utilisable dans le dispositif de la figure 1, • la figure 3 est une vue schématique d'un autre mode de réalisation particulier possédant une position de repos,
- la figure 4 est une vue schématique d'une variante de réalisation du dispositif de la figure 3,
- la figure 5 est une vue schématique d'une variante de réalisation du dispositif de la figure 1, et
- les figures 6 et 7 sont des vues schématiques d'autres multiplexeurs à insertion-extraction optiques utilisables dans le dispositif de la figure 1.

### EXPOSÉ DÉTAILLÉ DE MODES DE RÉALISATION PARTICULIERS

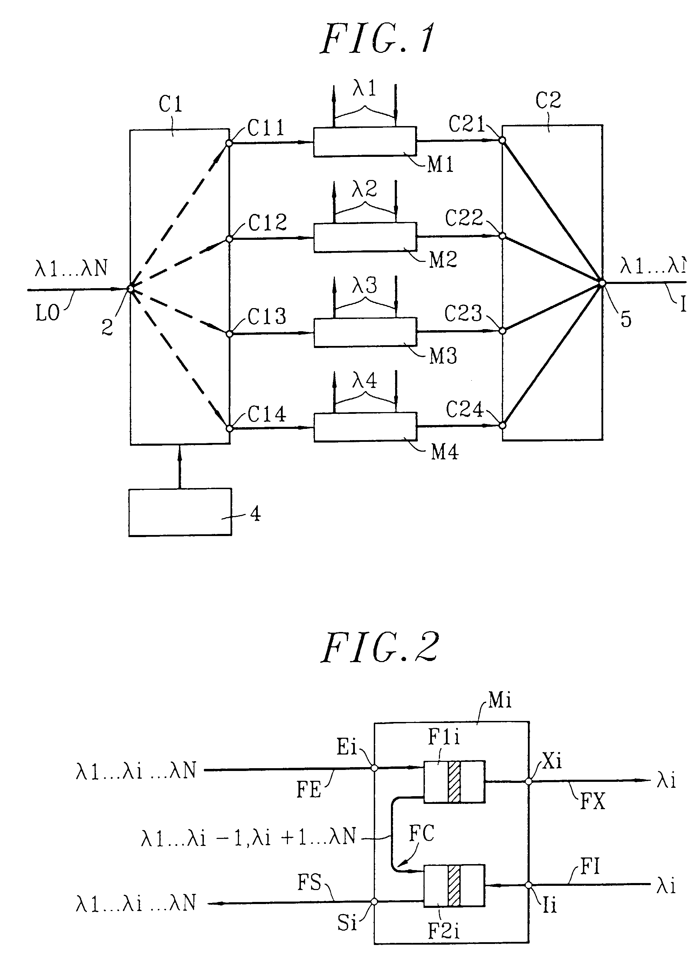

Le dispositif conforme à l'invention, qui est schématiquement représenté sur la figure 1, est destiné à extraire d'un ensemble de signaux optiques et à insérer dans cet ensemble de signaux un signal optique ayant une longueur d'onde déterminée, choisie parmi les longueurs d'onde des signaux de l'ensemble, avec possibilité de changer cette longueur d'onde choisie.

Les longueurs d'onde des signaux optiques considérés appartiennent à un ensemble de longueurs d'onde λ1 ... λN, où N est un nombre entier supérieur à 1.

Dans l'exemple représenté sur la figure 1, le nombre N est supérieur ou égal à 4 et le dispositif permet de choisir la longueur d'onde des signaux à insérer et des signaux à extraire parmi les longueurs d'onde λ1, λ2, λ3 et λ4.

Le dispositif de la figure 1 comprend des multiplexeurs à insertion-extraction optiques qui sont au nombre de quatre et portent respectivement les références M1, M2, M3 et M4.

Comme on le voit sur les figures 1 et 2, chacun des multiplexeurs Mi (1≤1≤4), a une entrée Ei, une sortie Si, une entrée d'insertion Ii et une sortie d'extraction Xi.

Le dispositif de la figure 1 comprend aussi un commutateur optique C1 ayant une entrée référencée 2 et autant de sorties qu'il y a de multiplexeurs, c'est-à-dire quatre dans l'exemple représenté.

Ce commutateur C1 est un commutateur à quatre positions.

Il est commandé par des moyens de commande référencés 4 qui permettent de choisir l'une des quatre positions c'est-à-dire de connecter l'entrée 2 du commutateur C1 à celle des sorties de ce commutateur que l'on a choisie.

Les sorties C11, C12, C13 et C14 du commutateur C1 sont respectivement reliées aux entrées E1 à E4 des multiplexeurs.

Le dispositif de la figure 1 comprend aussi un coupleur optique référencé C2 ayant autant d'entrées qu'il y a de multiplexeurs (c'est-à-dire quatre entrées) et une sortie 5.

Il s'agit donc d'un coupleur optique de type 4 vers 1 dans l'exemple représenté.

Les entrées C21, C22, C23 et C24 du coupleur C2 sont respectivement reliées aux sorties S1 à S4 des multiplexeurs M1 à M4.

Le dispositif de la figure 1 est inséré dans une ligne optique LO.

Cette ligne optique est parcourue par les signaux de longueurs d'onde λ1 ... λN.

La figure 2 montre la structure de chaque multiplexeur Mi (1≤1≤4).

A ce sujet, on se reportera au document (3).

Comme on le voit sur la figure 2, chaque multiplexeur Mi comprend un premier filtre multidiélectrique passe-bande F1i et un deuxième filtre multidiélectrique passe-bande F2i.

Le filtre F1i est optiquement couplé en un point Ei (entrée du multiplexeur Mi), par une fibre optique FE, à la sortie correspondante du commutateur C1 pour recevoir les signaux de longueurs d'onde λ1 ... λN susceptibles d'arriver à cette sortie correspondante.

Le filtre F1i est centré sur la longueur d'onde λi que l'on veut extraire avec le multiplexeur Mi et transmet le signal incident de longueur d'onde λi (signal à extraire).

Lorsqu'il parvient à la sortie Xi du filtre F1i (sortie d'extraction du multiplexeur Mi), ce signal ainsi transmis est envoyé, par l'intermédiaire d'une fibre FX, à des moyens non représentés de traitement du signal extrait.

Les autres signaux incidents, de longueurs d'onde λ1 ... λi-1, λi+1 ... λN, sont réfléchis par le filtre F1i et envoyés, par l'intermédiaire d'une fibre optique FC, au deuxième filtre F2i.

Ce filtre F2i a les mêmes caractéristiques spectrales que le filtre F1i.

On entend par là que le filtre F2i est centré sur la même longueur d'onde λi que le filtre F1i et a la même bande passante que ce dernier.

Ce filtre F2i réfléchit ainsi les signaux incidents de longueurs d'onde λ1 ... λi-1, λi+1 ... λN.

Ces signaux réfléchis par le filtre F2i sortent de ce dernier en un point Si (sortie du multiplexeur Mi) et sont transmis à l'entrée correspondante du coupleur C2 par l'intermédiaire d'une fibre FS.

Le filtre F2i est connecté, d'un côté, aux fibres FC et FS et, de l'autre côté, il est connecté à une fibre optique FI en un point Ii (entrée d'insertion du multiplexeur Mi).

Dans cette fibre FI se propage un signal optique de longueur d'onde λi que l'on veut insérer parmi les autres signaux.

Ce signal de longueur d'onde λi provient de moyens de génération non représentés.

Le signal à insérer, de longueur d'onde λi, est transmis par le filtre F2i et se trouve inséré parmi les autres signaux dans la fibre FS et parvient avec ceux-ci jusqu'à l'entrée correspondante du coupleur C2 pour repasser ensuite dans la ligne LO.

On précise que les pertes d'insertion pour les canaux en transit (λ1 ... λi-1, λi+1 ... λN) sont de 1dB et que la perte d'insertion pour la voie en extraction ou en insertion est de 1,5dB.

La fonction de transfert des filtres présente un " gabarit " qui dépend du nombre de cavités de ces filtres.

Par exemple, avec des filtres à trois cavités, on peut obtenir une bande passante plate sur environ 5 nm.

Dans une variante de réalisation non représentée, on remplace le filtre F2i de la figure 2 par un coupleur optique possédant trois branches respectivement couplées aux fibres FC, FS et FI et aptes à faire passer dans la fibre FS les signaux se propageant dans la fibre FC et à faire également passer dans cette fibre FS les signaux se propageant dans la fibre FI.

Suivant la position choisie pour le commutateur C1, les signaux arrivant à l'entrée parviennent au multiplexeur correspondant à cette position et l'on peut alors insérer et extraire des signaux dont la longueur d'onde correspond à ce multiplexeur.

En changeant la position, on pourra insérer et extraire des signaux d'une autre longueur d'onde (encore choisie parmi λ1 à λ4).

Dans une variante non représentée de la figure 1, le dispositif a une position neutre vis-à-vis des longueurs d'onde transmises sur la fibre principale LO.

Dans ce cas, l'un des multiplexeurs M1 à M4 est supprimé et la sortie correspondante du commutateur C1 est directement reliée à l'entrée correspondante du coupleur C2.

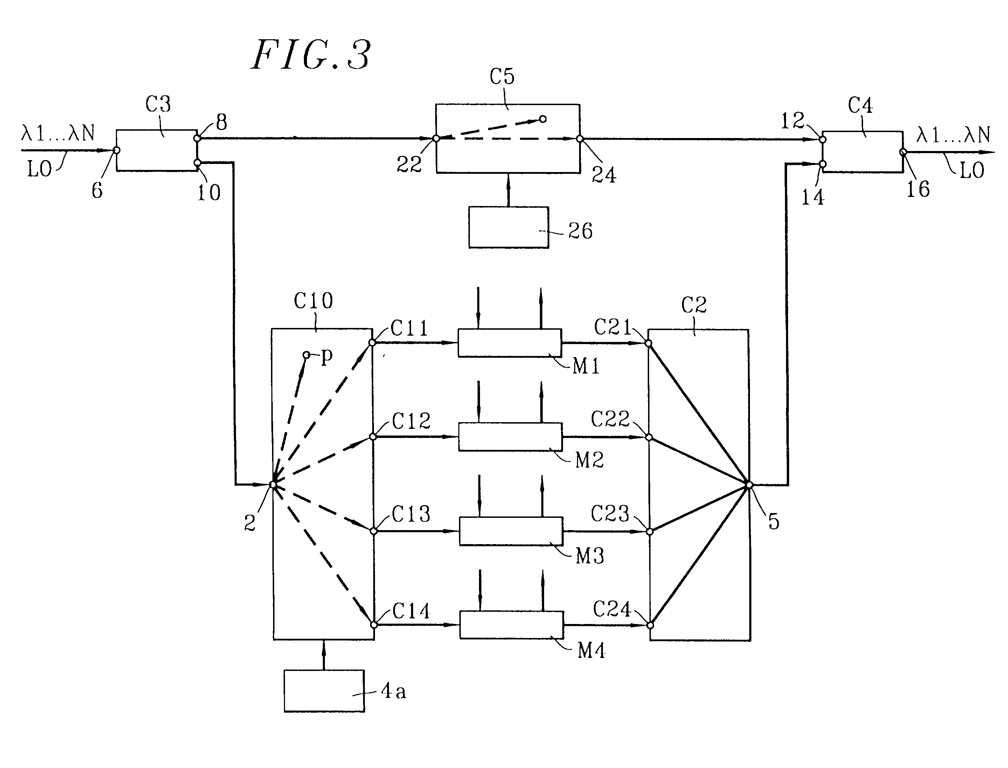

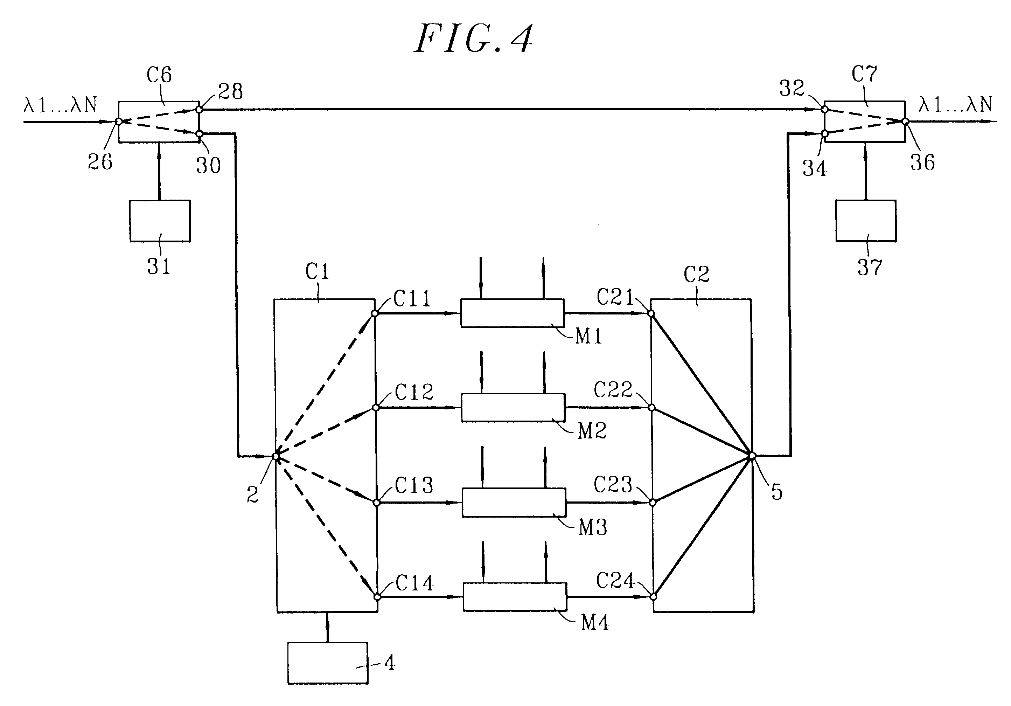

Les figures 3 et 4 sont relatives à des dispositifs conformes à l'invention possédant une position de repos dans laquelle aucune longueur d'onde n'est dérivée par les multiplexeurs.

Le dispositif conforme à l'invention schématiquement représenté sur la figure 3 diffère de celui de la figure 1 en ce qu'il comprend en outre deux coupleurs optiques supplémentaires C3 et C4 et un commutateur optique supplémentaire C5.

Le coupleur C3 a une entrée référencée 6 et deux sorties référencées 8 et 10.

Le coupleur C4 a deux entrées référencées respectivement 12 et 14 et une sortie référencée 16.

Dans le cas du dispositif de la figure 3, ce sont l'entrée du coupleur C3 et la sortie du coupleur C4 qui sont connectées à la ligne optique LO comme on le voit sur la figure 3.

La sortie 10 du coupleur C3 est reliée à l'entrée 2 du commutateur C1 et l'entrée 14 du coupleur C4 est reliée à la sortie 5 du coupleur C2.

Dans le cas de la figure 3, le commutateur C1 est remplacé par un commutateur C10 qui est commandé par des moyens appropriés 4a et qui a une position supplémentaire p par rapport au commutateur C1.

Lorsque le commutateur C10 est dans cette position supplémentaire, il n' envoie aucun signal incident vers les multiplexeurs M1 à M4.

Le commutateur optique C5 a une entrée 22 et une sortie 24.

L'entrée 22 est reliée à la sortie 8 du coupleur C3 et la sortie 24 est reliée à l'entrée 12 du coupleur C4.

Le commutateur C5 a deux positions :
- l'une dans laquelle tout signal parvenant à son entrée 22 est transmis à sa sortie 24 (état fermé) et
- l'autre dans laquelle aucun signal parvenant à son entrée 22 n'est transmis à sa sortie 24 (état ouvert).

Ce commutateur C5 est muni de moyens de commande 26 permettant de choisir la position voulue de ce commutateur C5.

Lorsque ce commutateur C5 est à l'état ouvert, les signaux qui se propagent dans la ligne LO parviennent au commutateur C10 qui est placé dans l'une des quatre positions de ce commutateur mentionnées dans la description de la figure 1.

Lorsqu'on met le commutateur C5 à l'état fermé, on place également le commutateur C1 dans la position supplémentaire p qu'il possède dans le cas de la figure 3.

Alors les signaux incidents de la ligne optique LO passent du coupleur C3 au coupleur C4 par l'intermédiaire du commutateur C5 pour repasser ensuite dans la ligne LO.

Ces signaux n'atteignent donc aucun multiplexeur.

Aucun signal ne peut alors être extrait par de l'un quelconque des multiplexeurs et l'on dit que le dispositif de la figure 4 est dans sa position de repos.

Le dispositif de la figure 4 diffère de celui de la figure 1 par le fait qu'il comprend en outre deux commutateurs C6 et C7.

Le commutateur C6 est un commutateur à deux positions qui comprend une entrée 26 et deux sorties 28 et 30.

Ce commutateur C6 est muni de moyens de commande 31 permettant de lui faire occuper l'une ou l'autre des deux positions.

Dans la première position, tout signal parvenant à son entrée 26 est transmis à sa sortie 30.

Dans la deuxième position, ce signal incident parvient à l'autre sortie 28.

Le commutateur C7 est un commutateur à deux positions possédant deux entrées 32 et 34 et une sortie 36.

Ce commutateur C7 est muni de moyens de commande 37 permettant de lui faire occuper l'une ou l'autre des deux positions.

Lorsque le commutateur C7 est dans sa première position, tout signal parvenant à son entrée 34 est transmis à sa sortie 36.

Dans la deuxième position, tout signal parvenant à l'entrée 32 est transmis à cette sortie 36.

Dans le cas de la figure 4, la ligne optique LO est reliée à l'entrée 26 du commutateur C6 et à la sortie 36 du commutateur C7 comme on le voit sur la figure 4.

La sortie 28 du commutateur C6 est reliée à l'entrée 32 du commutateur C7.

L'autre sortie 30 du commutateur C6 est, dans le cas de la figure 4, reliée à l'entrée 2 du commutateur C1.

La sortie 5 du coupleur C2 est reliée à l'entrée 34 du commutateur C7.

Pour pouvoir extraire des signaux par l'un des multiplexeurs du dispositif de la figure 4, on place le commutateur C6 dans la position permettant aux signaux incidents de longueurs d'onde λ1 ... λN de parvenir à l'entrée 2 du commutateur C1.

De même, on place le commutateur C7 dans la position permettant aux signaux qui parviennent à la sortie 5 du coupleur C2 d'arriver jusqu'à la sortie du commutateur C7.

Pour mettre le dispositif de la figure 4 dans sa position de repos, on place chacun des commutateurs C6 et C7 dans sa deuxième position.

Alors, les signaux transmis par la ligne optique LO passent du commutateur C6 directement au commutateur C7 et aucun signal ne peut être extrait de l'un quelconque des multiplexeurs.

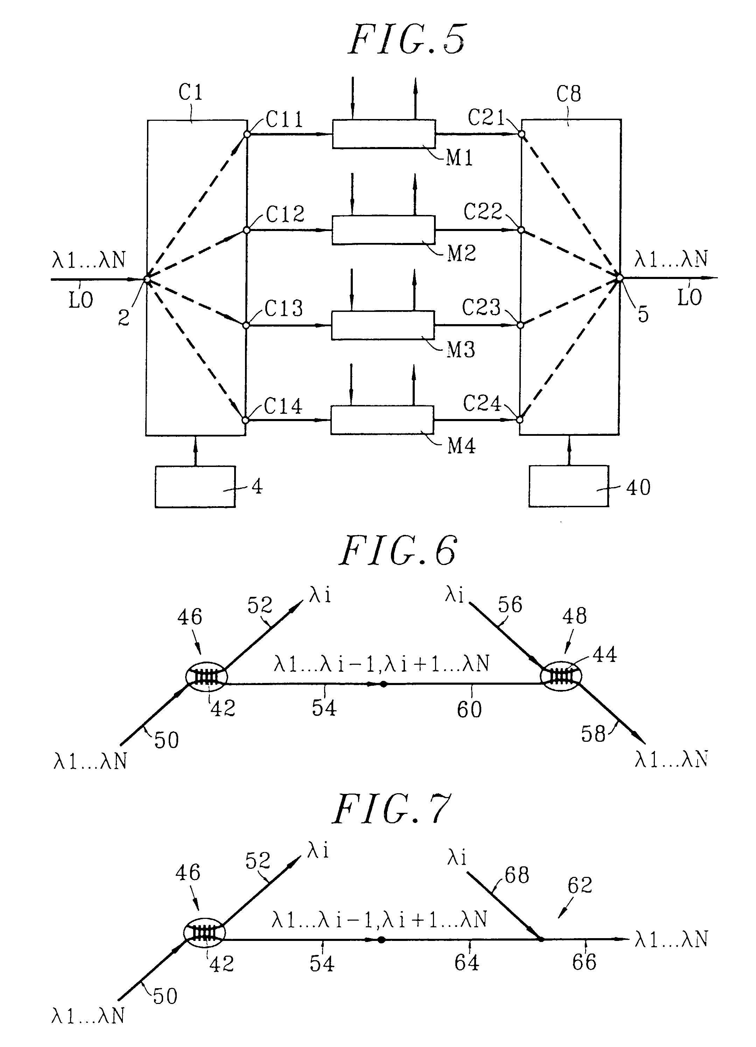

La figure 5 illustre schématiquement la possibilité de remplacer, dans le cas des dispositifs des figures 1 et 4, le coupleur C2 par un commutateur optique C8 à quatre positions, commandé par des moyens appropriés 40.

Ce commutateur C8 a quatre entrées, qui sont encore référencées C21, C22, C23 et C24 et respectivement reliées aux quatre sorties du multiplexeur, et une sortie encore référencée 5 et reliée à la ligne optique LO.

Les moyens de commande 40 permettent de faire communiquer la sortie de celui des quatre multiplexeurs que l'on a choisi avec la sortie du commutateur C8.

L'utilisation du commutateur C8 présente l'avantage de conduire à un dispositif ayant moins de pertes optiques qu'un dispositif comprenant le coupleur C2.

Par exemple, avec un dispositif du genre de celui de la figure 1 et utilisant le commutateur C8 au lieu de coupleur C2, les pertes d'insertion sont réduites à environ 3dB pour les canaux en transit, sans perturbation sur les longueurs d'onde car les filtres ont une réponse plate pour les canaux en transit.

Dans le cas des dispositifs des figures 3 et 4 utilisant encore le commutateur C8, la perte d'insertion dans la position de repos est de 7 dB dans le cas de la figure 3 et de 1,5 dB dans le cas de la figure 4.

Cette perte d'insertion est de 10 dB dans le cas de la figure 3 et de 4 dB dans le cas de la figure 4 lorsqu'une longueur d'onde traverse un multiplexeur optique.

Les filtres multidiélectriques passe-bande sont plus particulièrement utilisables pour réaliser les multiplexeurs à insertion-extraction optiques d'un dispositif conforme à l'invention tant que la distance entre les canaux de longueurs d'onde est supérieure à 2 nm.

Pour cette valeur de 2 nm et pour des valeurs inférieures, on utilise de préférence d'autres moyens que les filtres multidiélectriques passe-bande pour réaliser les multiplexeurs.

On peut utiliser tout moyen ayant une fonction de transfert passe-bande comme par exemple les filtres à réseaux de Bragg photo-inscrits.

On consultera à ce sujet le document (4).

La figure 6 montre un exemple de multiplexeur à insertion-extraction optique qui est utilisable avec les dispositifs des figures 1 à 5 et réalisé au moyen de deux filtres à réseau de Bragg photo-inscrits 42 et 44.

Ces filtres 42 et 44 sont respectivement formés au niveau de la jonction des deux branches de coupleurs optiques en Y respectivement référencés 46 et 48, comme on le voit sur la figure 6.

Dans ce cas, l'une des branches référencées 50 du coupleur 46 reçoit les signaux de longueurs d'onde λ1... λN.

L'une des deux autres branches, référencée 52, de ce coupleur 46 correspond à la sortie d'extraction du multiplexeur et transmet le signal extrait de longueur d'onde λi.

La troisième branche 54 du coupleur 46 transmet les signaux de longueurs d'onde λ1 ... λi-1, λ i+1 ... λN.

En effet, le filtre à réseau de Bragg photo-inscrit 42 est conçu pour réfléchir la longueur d'onde λi et transmettre les autres longueurs d'onde.

Il en est de même pour l'autre filtre 44 formé dans le coupleur 48.

L'une 56 des branches de ce coupleur 48 reçoit un signal de longueur d'onde λi à insérer.

Ce signal est réfléchi par le filtre 44 et passe dans une deuxième branche 58 du coupleur 48 pour s'insérer parmi les signaux de longueurs d'onde λ1 ... λi-1, λi+1 ... λN qui sont également transmis par cette branche 58.

La troisième branche 60 du coupleur 48 est reliée à la branche 54 du coupleur 46 comme on le voit sur la figure 6.

La figure 7 est une vue schématique d'une variante de réalisation du multiplexeur à insertion-extraction optique représenté sur la figure 6.

Dans cette variante de réalisation, le coupleur 48 contenant un filtre à réseau de Bragg photo-inscrit est remplacé par un simple coupleur à trois branches 62.

L'une 64 des branches de ce coupleur est reliée à la branche 54 du coupleur 46.

La deuxième branche 66 de ce coupleur 62 transmet les signaux de longueurs d'onde λ1 ... λN.

La troisième branche 68 de ce coupleur 62 reçoit le signal de longueurs d'onde λi à insérer parmi les signaux de longueurs d'onde λ1 ... λi-1, λi+1 ... λ N se propageant dans la branche 54 du coupleur 46 qui est reliée à la branche 64 du coupleur 62.

Les documents cités dans la présente description sont les suivants :
(1) A.F. Elrefaie, " Multiwavelength survivable ring network architectures ", Bellcore ICC 93
(2) A.F. Elrefaie et al., " Fibre amplifiers in closed ring WDM networks ", Electron. Lett., vol.28, p.2340-2341, 1992
(3) A. Hamel, V. Tholey, M.J. Chawki, " WDM-SDH Networks : an alternative to SDH rings ", EFOC&N 94, p.98-101
(4) J.L. Archambault et al., "Novel channel dropping filter by grating frustrated coupling in singlemode optical fiber", OFC'94, p.51.

## Revendications

1. Dispositif reconfigurable pour l'insertion et l'extraction de longueurs d'onde, ce dispositif étant caractérisé en ce qu'il comprend :
- une pluralité de multiplexeurs à insertion-extraction optiques (M1, M2, M3, M4) ayant chacun une entrée, une sortie, une entrée d'insertion et une sortie d'extraction,
- un commutateur optique principal (C1, C10) à au moins M positions, où M est le nombre de multiplexeurs à insertion-extraction optiques, ce commutateur optique principal ayant une entrée et une pluralité de sorties, chaque position permettant de relier l'une de ces sorties à ladite entrée de l'un des multiplexeurs à insertion-extraction optiques,
- un moyen de couplage optique (C2, C8) ayant une sortie et une pluralité d'entrées respectivement reliées auxdites sorties des multiplexeurs à insertion-extraction optiques,
et en ce que chaque multiplexeur à insertion-extraction optique comprend :
- un premier moyen optique (F1i, 42) formant un filtre passe-bande, apte à orienter vers la sortie d'extraction du multiplexeur un signal optique parmi un ensemble de signaux optiques de longueurs d'onde différentes les unes des autres, arrivant à ladite entrée du multiplexeur, et
- un deuxième moyen optique (F2i, 44) qui reçoit les autres signaux de l'ensemble et qui est apte à insérer parmi ceux-ci un signal optique provenant de l'entrée d'insertion du multiplexeur, ces autres signaux et le signal inséré étant envoyés à ladite sortie du multiplexeur.

2. Dispositif selon la revendication 1, caractérisé en ce que les premier et deuxième moyens optiques comprennent des filtres multidiélectriques passe-bande (F1i, F2i) centrés sur la même longueur d'onde.

3. Dispositif selon la revendication 1, caractérisé en ce que les premier et deuxième moyens optiques comprennent des filtres à réseaux de Bragg photo-inscrits (42, 44).

4. Dispositif selon l'une quelconque des revendications 1 à 3, caractérisé en ce qu'il comprend en outre des moyens de repos (C3, C4, C5; C6, C7) destinés à empêcher l'extraction des signaux par les multiplexeurs à insertion-extraction optiques.

5. Dispositif selon la revendication 4, caractérisé en ce que les moyens de repos comprennent :
- un premier coupleur optique (C3) ayant une entrée, une première sortie reliée à l'entrée du commutateur optique principal et une deuxième sortie,
- un deuxième coupleur optique (C4) ayant une sortie, une première entrée reliée à la sortie du moyen de couplage optique et une deuxième entrée, et
- un commutateur optique à deux positions (C5) qui relie la deuxième sortie du premier coupleur à la deuxième entrée du deuxième coupleur et qui, dans une position, est apte à laisser passer la lumière provenant de cette deuxième sortie pour qu'elle parvienne à cette deuxième entrée et, dans une autre position, empêche ce passage de la lumière,
et en ce que le commutateur optique principal possède en outre une position supplémentaire dans laquelle aucune lumière parvenant à l'entrée de ce commutateur principal ne peut atteindre les multiplexeurs.

6. Dispositif selon la revendication 4, caractérisé en ce que les moyens de repos comprennent :
- un premier commutateur optique (C6) ayant des première et deuxième positions et ayant une entrée, une première sortie reliée à l'entrée du commutateur optique principal et une deuxième sortie, et
- un deuxième commutateur optique (C7) ayant des première et deuxième positions et ayant une première entrée reliée à la sortie du moyen de couplage optique, une deuxième entrée reliée à la deuxième sortie du premier commutateur et une sortie,
et en ce que, lorsque les premier et deuxième commutateurs sont dans leur première position, la lumière parvenant à l'entrée du premier commutateur parvient à l'entrée du commutateur principal et la lumière parvenant à la première entrée du deuxième commutateur parvient à la sortie de celui-ci, tandis que lorsqu'ils sont dans leur deuxième position, la lumière parvenant à l'entrée du premier commutateur est envoyée à la deuxième entrée du deuxième commutateur.

7. Dispositif selon l'une quelconque des revendications 1 à 6, caractérisé en ce que le moyen de couplage optique est un coupleur optique (C2) de type M vers 1.

8. Dispositif selon l'une quelconque des revendications 1 à 6, caractérisé en ce que le moyen de couplage optique est un commutateur optique secondaire (C8) à M positions, ce commutateur optique secondaire ayant M entrées et une sortie, chaque position permettant de relier l'une de ces M entrées à la sortie de ce commutateur secondaire.
